# NEUE EUROPÄISCHE PATENTSCHRIFT

(11) **EP 3 141 335 B2**
(45) Veröffentlichungstag und Bekanntmachung des Hinweises auf die Entscheidung über den Einspruch: **19.11.2025**
(45) Hinweis auf die Patenterteilung: 14.04.2021
(21) Anmeldenummer: 15201021.1
(22) Anmeldetag: 18.12.2015
(51) Int. Cl.: B23P 15/00, B21B 27/03, B21K 1/06, B21K 5/00, B22F 7/08, B21J 5/00, B21K 1/12, B29C 48/505, B22F 3/15, B22F 3/17, B23K 10/02, B22F 3/24, B29C 48/03, B23K 101/06, B23K 103/04, B22F 5/00

(54) **VERFAHREN ZUM HERSTELLEN EINES BAUTEILS MIT EINEM AUS STAHL BESTEHENDEN KERNABSCHNITT**
METHOD FOR PRODUCING A COMPONENT HAVING A CORE SECTION MADE OF STEEL
PROCÉDÉ DE FABRICATION D'UN COMPOSANT PRÉSENTANT UNE SECTION CENTRALE EN ACIER

(30) Priorität: 08.09.2015 DE 102015115061
(43) Veröffentlichungstag der Anmeldung: 15.03.2017
(73) Patentinhaber: Deutsche Edelstahlwerke Specialty Steel GmbH & Co. KG, 58452 Witten (DE)
(72) Erfinder: van Bennekom, André, 57234 Wilnsdorf (DE); Hill, Horst, 47929 Grefrath (DE)
(74) Vertreter: Lenzing Gerber Stute

(56) Entgegenhaltungen:
- EP-A1- 1 512 484
- EP-A2- 0 388 968
- WO-A1-2014/001024
- WO-A1-2015/197466
- DE-C- 955 240
- GB-A- 475 712
- JP-A- H0 459 901
- JP-A- S 645 611
- JP-A- S62 148 004
- US-A- 4 484 959
- US-A- 4 697 320
- US-A- 4 844 863
- US-A1- 2011 195 270
- US-A1- 2014 037 979

## Beschreibung

Die Erfindung betrifft ein Verfahren zum Herstellen eines Bauteils, nämlich einer Welle, Walze oder einer Extruderschnecke, wobei das Bauteil einen aus einem Metallwerkstoff, insbesondere einem Stahl, bestehenden Kernabschnitt und eine von dem Kernabschnitt getragene, an einer Umfangsfläche des Kernabschnitts vorhandene verschleißfeste Schicht aufweist.

Ein typisches Beispiel für ein solches Bauteil ist eine Walze für das Warm- oder Kaltwalzen von Metallflachprodukten, bei denen es sich typischerweise um Bänder, Bleche oder daraus gewonnene Zuschnitte handelt, die aus Stahl oder Nichteisenmetall bestehen. Je nach Anwendungen erreichen die Walzen Maße von bis zu 1 m Ballendurchmesser und Längen von bis zu 10 m.

Andere Beispiele für Einsatzgebiete von Bauteilen der hier in Rede stehenden Art sind die Papier-, Glas- und Holzindustrie sowie die kunststoffverarbeitende Industrie, wo es insbesondere bei Verarbeitung von faserverstärkten Kunststoffen zu einer erheblichen abrasiven Verschleißbelastung der eingesetzten Werkszeuge kommen kann.

Bauteile der erfindungsgemäß herzustellenden Art sind somit in der Praxis typischerweise im Bereich einer Umfangsfläche, die im praktischen Einsatz mit einem anderen Bauteil oder dem jeweils zu verarbeitenden Produkt in Kontakt kommt, hohen Druck- oder Reibbelastungen sowie gegebenenfalls auch Korrosion ausgesetzt. Um hierdurch andernfalls ausgelösten übermäßigen Verschleiß zu vermeiden, ist die betreffende Kontaktfläche an der Außenseite der verschleißfesten Schicht ausgebildet.

Um die Standzeiten von beim Warmwalzen von Stahlwarmband eingesetzten Arbeitswalzen zu erhöhen, ist in der DE 10 2009 037 278 A1 vorgeschlagen worden, eine Arbeitswalze, die in einem Gerüst zum Fertigwarmwalzen von aus Stahl bestehendem Warmband eingesetzt wird, mit einer verschleißresistenten Schicht zu versehen, die aus pulvermetallurgischem Material durch heißisostatisches Pressen, in der Fachsprache auch kurz als "HIP" bezeichnet, hergestellt sein soll.

Ein vergleichbarer Vorschlag findet sich in der EP 1 365 869 B1, gemäß der ebenfalls eine zum Warmwalzen eingesetzte Arbeitswalze zur Erhöhung ihrer Verschleißbeständigkeit mit einer durch das HIP-Verfahren aufgebrachten Schicht versehen ist.

Bei der Fertigung derartiger Arbeitswalzen wird zunächst durch Gießen oder Schmieden ein aus Gusseisen oder einem geeigneten Stahl bestehender Grundkörper hergestellt, der einen im Einsatz mit dem Walzgut in Kontakt kommenden Ballenbereich und daran angeformte Lagerzapfen umfasst, über die die Walze im jeweiligen Walzgerüst gelagert wird. Der Werkstoff des Grundkörpers weist dabei mechanische Eigenschaften auf, die optimal auf die im praktischen Einsatz auftretenden Kraftbelastungen abgestimmt sind.

Der derart vorgefertigte Grundkörper wird dann mit einer Blechkapsel umhüllt. Diese ist so dimensioniert, dass zwischen ihrer Innenumfangsfläche und der Umfangsfläche des Ballens ein um den Grundkörper umlaufender Hohlraum gebildet ist. Dieser Hohlraum wird mit einem Legierungspulver gefüllt. Daraufhin wird die Blechkapsel gasdicht verschlossen. Anschließend erfolgt die Verdichtung unter allseitig wirkendem hohen Druck und hoher Temperatur. Druck und Temperatur werden dabei so eingestellt, dass das Pulver verdichtet und versintert. Auf diese Weise wird auf dem Grundkörper eine vollständig dichte Schicht erzeugt, bei der nicht nur die einzelnen Pulverkörner miteinander, sondern mit dem Grundkörper versintert sind, so dass ein homogener Verbundkörper entsteht. Nach Ende des heißisostatischen Pressens wird die Blechkapsel abgetragen. Abschließend kann eine thermische Nachbehandlung erfolgen, um der erhaltenen Verbundwalze die geforderten mechanischen Eigenschaften zu verleihen. Ebenso erfolgt in der Regel eine mechanische Endbearbeitung, um die geforderte Maßhaltigkeit zu gewährleisten.

Ein anderer Vorschlag zum Ausbilden einer verschleißfesten Schicht an einem Stahlkern einer Walze für das Kaltwalzen von Stahlblechen ist in der US 6,206,814 beschrieben. Beim dort vorgestellten Verfahren wird um einen zylindrischen, aus dem Stahl SCM440 (EN-Werkstoffnummer 1.7223) bestehenden Kernabschnitt durch Verbundguss eine Hülle aus einem hoch verschleißfesten Material gebildet.

In der US 4,484,959 ist als weitere Alternative zu den voranstehend erläuterten Fertigungswegen vorgeschlagen worden, ein Bauteil, bei dem ein Kernabschnitt andere Eigenschaften besitzen muss als eine den Kernabschnitt umgebende Schicht, dadurch herzustellen, dass auf den aus einem niedrig legierten Baustahl bestehenden Kernabschnitt durch Auftragsschweißen die Umfangsschicht aufgebracht wird, welche aus einem Cr und W enthaltenden Schnellarbeitsstahl besteht. Auf diese Weise sollen sich insbesondere Arbeitswalzen für das Kaltwalzen so ertüchtigen lassen, dass sie die an ihre Standzeit gestellten Anforderungen sicher erfüllen.

In modernen Walzstraßen werden immer höhere Anforderungen an die Breite des verarbeiteten Walzguts gestellt. Dementsprechend müssen immer längere Walzen zur Verfügung gestellt werden, um größere Breiten betriebssicher walzen zu können. Als problematisch erweist sich hier, dass beispielsweise der mit der Beschichtung von derart langen Walzen im HIP-Verfahren verbundene Aufwand beträchtlich ist. So nimmt der für das heißisostatische Pressen erforderliche apparative Aufwand mit zunehmender Länge der Walzen überproportional zu. Heute zur Verfügung stehende HIP-Anlagen sind daher in ihrer Länge so begrenzt, dass mit ihnen Walzen, deren Dimensionen an die heutigen Forderungen der Betreiber von Walzstraßen angepasst sind, nicht mehr verarbeitet werden können.

In der WO 2014/001024 A1 ist zur Lösung dieses Problems vorgeschlagen worden, für die Herstellung von Walzen für das Kalt- oder Warmwalzen von Metallflachprodukten zunächst einen Grundkörper zu fertigen, der sich lediglich über den Ballenbereich der zu fertigenden Walze erstreckt, dann diesen Grundkörper durch heißisostatisches Pressen mit einer verschleißfesten Schicht zu belegen und erst danach die zum drehbaren Lagern der Walze im Walzgerüst benötigten Zapfen an den Grundkörper anzuschweißen. Dadurch, dass die Zapfen gemäß diesem Vorschlag erst nach dem heißisostatischen Pressen mit dem Grundkörper verbünden werden, lassen sich die zur Verfügung stehenden HIP-Anlagen über ihre volle Länge für das HIP-Beschichten des Ballenbereichs nutzen, wogegen bei konventioneller Vorgehensweise nicht nur der Ballenbereich, sondern auch die an den Ballenbereich des Grundkörpers bereits angeformten Zapfen in der HIP-Anlage untergebracht werden müssen.

Des Weiteren ist aus der US 2011/195270 A1 ein Verfahren beschrieben, bei dem aus gegossenen Blöcken, die aus einem spröden Stahlwerkstoff bestehen, durch Schmieden ein Halbzeug hergestellt wird. Um zu verhindern, dass es bei der Warmumformung zu Rissen an der Oberfläche des spröden Blocks kommt, wird der Block an seiner mit dem Schmiedewerkzeug im Prozess in Kontakt kommenden Oberfläche durch Auftragsschweißen mit einer zähen metallischen Schicht versehen.

Aus der JP S64 5611 A ist zudem ein Verfahren bekannt, bei dem ein Verbundwerkstoff-Walzenrohling bereitgestellt wird, auf dem durch thermisches Spritzen eine Schicht gebildet wird, die einen großen Verschleißwiderstand aufweist und unempfindlich gegen die beim Walzen auftretenden Belastungen sein soll. Der so beschichtete Verbund-Walzenrohling kann einer Wärmebehandlung bei Schmiedetemperaturen unterzogen werden, um die Anbindung der Beschichtung an das Kernmaterial der Walze zu optimieren, wobei während der Wärmebehandlung die Temperatur in der Mitte des Rohlings niedrig gehalten wird. Die auf Schmiedetemperatur erwärmte thermische Spritzschicht wird anschließend stärker schmiedeverformt als der Rohling, um eine optimierte Anbindung der Schicht an das Material des Rohlings und eine Verdichtung der Spritzschicht zu erzielen.

Vor dem Hintergrund des voranstehend erläuterten Standes der Technik hat sich die Forderung ergeben, ein Verfahren zu schaffen, das es auf einfache Weise erlaubt, Bauteile, nämlich eine Welle, Walze oder eine Extruderschnecke, herzustellen, die aufgrund ihres Eigenschaftsprofils besonders für den Einsatz unter hohen Belastungen und damit einhergehend hoher Verschleißgefährdung geeignet sind. Insbesondere sollte es die Erfindung ermöglichen, Bauteile, wie beispielsweise Walzen für das Warm- oder Kaltwalzen von Metallflachprodukten oder im Bereich der Kunststoffverarbeitung eingesetzte Maschinenteile, zu fertigen, die eine beträchtliche Länge aufweisen.

Die Erfindung hat diese Aufgabe durch das in Anspruch 1 angegebene Verfahren gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Die Erfindung basiert somit auf dem Gedanken, ausgehend von einem Kernabschnittsrohling mit einer zylindrischen Form, der aufgrund seiner im Vergleich zum fertigen herzustellenden Bauteil kompakten Form leichter zu handhaben ist und bei dem die Ausdehnungen in den verschiedenen Raumrichtungen optimalerweise nur in einem begrenzten Maße voneinander abweichen, durch eine Umformung das fertige Bauteil zu formen und zwar nachdem das Material, welches die verschleißfeste Schicht des fertigen Bauteils bildet, auf den Kernabschnittsrohling aufgetragen worden ist. (Als "Raumrichtungen" werden im vorliegenden Text die orthogonal zueinander ausgerichteten drei Raumrichtungen eines kartesischen Koordinatensystems in Bezug genommen.)

Das Material der verschleißfesten Schicht und des Grundkörpers werden somit beim erfindungsgemäßen Verfahren gemeinsam so lange umgeformt, bis das fertige Bauteil zumindest in seiner Grundform vorliegt und anschließend, sofern noch erforderlich, fertig bearbeitet werden kann.

Im Arbeitsschritt a) wird hierzu ein Kernabschnittsrohling mit einer zylindrischen Form bereitgestellt, aus dem im Zuge der weiteren Umformung der Kernabschnitt des herzustellenden Bauteils geformt wird.

Handelt es sich bei dem herzustellenden Bauteil um eine Walze, so kann der Kernabschnittsrohling in der in der Praxis bei der Herstellung von Walzen üblichen Weise zum Beispiel aus Stahlguss oder Gusseisen erzeugt werden. Hierfür geeignete Stähle sind typischerweise weiche Stähle mit hoher Zähigkeit.

Für den Kernabschnittsrohling sind demnach allgemein Baustähle geeignet, insbesondere solche, die eine hohe Zähigkeit besitzen.

Für die verschleißfeste Schicht sind dagegen alle Stähle mit ausreichender Verschleißbeständigkeit geeignet, insbesondere solche, die sich in Pulverform verarbeiten lassen. Hierzu zählen handelsübliche Kaltarbeitsstähle und Schnellarbeitsstähle mit einem entsprechenden Eigenschaftsprofil.

Erfindungsgemäß werden für die verschleißfeste Schicht Kaltarbeitsstähle oder Schnellarbeitsstähle verwendet.

Ein für die Praxis besonders wichtiger Fall ist die Herstellung eines rotationssymmetrischen Bauteils. In diesem Fall entspricht das Materialvolumen des optimalerweise ebenfalls zylindrisch geformten Kernabschnittsrohlings mindestens dem Materialvolumen des Kernabschnitts des herzustellenden Bauteils.

"Mindestens" heißt in diesem Zusammenhang, dass das Materialvolumen des Kernabschnittsrohlings in der Praxis stets um ein gewisses Übermaß größer sein wird als das Materialvolumen des Kernabschnitts des fertigen Bauteils, um Materialverlust bei der in der Regel spanabhebend erfolgenden Fertigbearbeitung des Bauteils (Arbeitsschritt d)) zu kompensieren.

Im Fall, dass es sich bei dem erfindungsgemäß herzustellenden Bauteil um eine Walze mit an ihren Stirnseiten angeformten Zapfen handelt, umfasst das Materialvolumen des Kernabschnittsrohlings auch das Volumen, das auf die an dem Kernabschnitt auszubildenden Zapfen entfällt, sofern diese aus dem Material des Kernabschnittsrohlings geformt werden sollen. Alternativ zu einer umformtechnischen Erzeugung aus dem Material des Kernabschnittsrohlings ist es selbstverständlich ebenso denkbar, die Zapfen in an sich bekannter Weise nachträglich an dem Kernabschnitt anzubringen. Hierzu können die aus einem geeigneten Material bestehenden Zapfen beispielsweise an die jeweilige Stirnseite des Kernabschnitts angeschweißt oder in einer mechanisch wirkenden Verbindung angekoppelt werden.

Entscheidend für die Erfindung ist, dass der Kernabschnittsrohling bezogen auf eine Raumrichtung kürzer ist als die Abmessung, die der Kernabschnitt des fertigen Bauteils in dieser Raumrichtung hat, und dass der Kernabschnittsrohling gleichzeitig bezogen auf eine andere Raumrichtung größer ist als die Abmessung, die der Kernabschnitt des fertigen Bauteils in dieser anderen Raumrichtung hat.

Handelt es sich bei dem herzustellenden Bauteil um ein rotationssymmetrisches Teil von großer, längs seiner zentralen Längsachse gemessenen Länge, wie eine Walze für ein Walzwerk oder eine Extrudierschnecke für die Kunststoffverarbeitung, so ist die Länge des Kernabschnittsrohlings dementsprechend deutlich kürzer als die Länge des fertigen Bauteils. Gleichzeitig ist in diesem Fall der Durchmesser des Kernabschnittsrohlings entsprechend größer als der Durchmesser des fertigen Bauteils, um die erforderliche Volumenkonstanz zu gewährleisten. Da der erfindungsgemäß bereitgestellte Kernabschnittsrohling keiner Raumrichtung extrem ausgedehnt ist, können bei erfindungsgemäßer Vorgehensweise für den Auftrag des die verschleißfeste Schicht bildenden Materials (Arbeitsschritt b)) konventionelle, für diesen Zweck üblicherweise vorgesehene Einrichtungen verwendet werden.

Soll erfindungsgemäß das Material der verschleißbeständigen Schicht durch Anwendung des HIP-Verfahrens auf dem Kernabschnittsrohling aufgebracht und mit ihm fest verbunden werden, so können hierzu insbesondere solche in Praxis zur Verfügung stehenden und wirtschaftlich betreibbaren HIP-Einrichtungen eingesetzt werden, deren Länge eigentlich zu kurz ist, um Bauteile mit den heutzutage geforderten extremen Längen unter Anwendung des heißisostatischen Pressens zu fertigen. Die erfindungsgemäße Vorgehensweise führt hier zu einer beträchtlichen Reduzierung des Aufwands für die beim HIP-Verfahren unvermeidbare Kapselfertigung, da nicht die möglicherweise komplexe Form des fertigen Bauteils nachgebildet werden muss, sondern die simple Form des kompakten Kernabschnittsrohlings.

Genauso können im Fall, dass das die verschleißbeständige Schicht bildende Material erfindungsgemäß durch Auftragsschweißen auf die jeweilige Umfangsfläche des Kernabschnittsrohlings aufgebracht werden soll, hierzu konventionelle Einrichtungen mit einer heute üblichen Längserstreckung eingesetzt werden. Im Arbeitsschritt c) wird der nach dem Arbeitsschritt b) erhaltene, aus dem Kernabschnittsrohling und der auf ihm aufgetragenen und fest mit ihm verbundenen verschleißfesten Schicht gebildete Verbundkörper zu dem Bauteil umgeformt. Die Umformung wird dabei so durchgeführt, dass der Verbundkörper in der Raumrichtung, in der er kürzer ist als das fertige Bauteil, gestreckt wird, wogegen er in der anderen Raumrichtung, in der er größer ist als das fertige Bauteil, gestaucht wird. Für die Umformung eignet sich insbesondere das Schmieden.

Im Zuge des Umformprozesses erhält der Verbundkörper nicht nur die Form des herzustellenden Bauteils, sondern es kommt aufgrund der Verformung selbst, der dazu gegebenenfalls erforderlichen Erwärmung, der Streckung des Verbundkörpers und den damit einhergehenden Kräften zu einer Kornfeinung und -streckung, wodurch die Gebrauchseigenschaften insbesondere des Kernabschnitts des fertigen Bauteils optimiert und negativen Einflüssen von im Kernabschnittsrohling vorhandenen nicht metallische Einschlüsse reduziert werden. Ist zum Auftrag des verschleißfesten Materials auf den Grundkörper ein HIP-Prozess durchgeführt worden, so kann der Umformprozess so gesteuert werden, dass die beim HIPen in Folge der dort erforderlichen Langzeiterwärmung eintretenden Veränderungen des Gefüges des Gefügerohlings beseitigt werden.

Sollen an dem Bauteil Umfangsflächenabschnitte vorhanden sein, die frei sind von dem verschleißfesten Material, wie beispielsweise im Fall von umformtechnisch an einer erzeugten Lagerzapfen deren Umfangsfläche, so kann dies entweder dadurch erzielt werden, dass die betreffenden Bereiche im Arbeitsschritt b) vom Auftrag des verschleißfesten Materials freigehalten werden oder dass das verschleißfeste Material bei der optionalen Fertigbearbeitung des Bauteils von dem betreffenden Abschnitt der Umfangsfläche nachträglich wieder entfernt wird. Beim HIP-Prozess kann eine Aussparung von bestimmten Flächenabschnitten des Umfangs des Kernabschnittsrohlings dadurch bewerkstelligt werden, dass die den Kernabschnittsrohling umgebende Kapsel dort dicht am Umfang des Kernabschnittsrohlings anliegt. Wird dagegen das verschleißfeste Material durch Auftragsschweißen auf den Umfang des Kernabschnittsrohlings aufgetragen, so kann der Auftragsschweißvorgang im Bereich der betreffenden Abschnitte unterbrochen werden. Im Fall, dass das herzustellende Bauteil eine Walze zum Warm- oder Kaltwalzen von metallischen Bändern ist und an den Stirnseiten seines Kernabschnitts jeweils ein koaxial zum Kernabschnitt ausgerichteter Zapfen ausgebildet ist, kann es zu diesem Zweck dementsprechend vorteilhaft sein, wenn beim Auftrag des die verschleißfeste Schicht bildenden Materials (Arbeitsschritt b)) ausgehend von der jeweiligen Stirnseite des Kernabschnittsrohlings über eine achsparallel zur Längsachse der auszubildenden Zapfen gemessene Länge ausgespart wird, die derart bemessen ist, dass das Volumen des Grundkörperendabschnitts, über den sich die ausgesparte Länge der Umfangsfläche erstreckt, mindestens dem Volumen des an der jeweiligen Stirnseite der fertigen Walze auszubildenden Zapfens entspricht.

Grundsätzlich ist es denkbar, die Umformung (Arbeitsschritt c)) des Verbundkörpers so auszuführen, dass die Abmessungen des nach dem Arbeitsschritt c) erhaltenen Bauteils den geforderten Fertigmaßen entsprechen. In der Praxis wird sich jedoch eine optimierte Fertigungsgenauigkeit dadurch erzielen lassen, dass die Umformung des Verbundkörpers im Arbeitsschritt c) derart durchgeführt wird, dass das Bauteil nach dem Arbeitsschritt c) in mindestens einer Raumrichtung ein Übermaß gegenüber dem Sollfertigabmaß des Bauteils in dieser Raumrichtung aufweist, und dass das Bauteil im Arbeitsschritt d) durch eine spanabhebende Bearbeitung so fertig bearbeitet wird, dass seine Abmessung in der betreffenden Raumrichtung dem Solfertigmaß entspricht.

Selbstverständlich können zwischen den Arbeitsschritten a) - d) oder nach dem Arbeitsschritt d) andere Arbeitsschritte absolviert werden, wenn dies für die Optimierung der Eigenschaften des herzustellenden Bauteils zweckmäßig ist. Dies schließt beispielsweise die Möglichkeit einer abschließenden Wärmebehandlung zur Verbesserung der mechanischen Eigenschaften des Bauteils im Ganzen oder einzelner seiner Abschnitte ein. So können im Fall, dass es sich bei dem Bauteil um eine Walze handelt, die Zapfen oder der zwischen den Zapfen vorhandene zentrale Ballenbereich einer Wärmebehandlung unterzogen werden, die ein Austenitisieren und Anlassen umfasst, sowie durch spanabhebende Bearbeitungsverfahren mechanisch bearbeitet werden, um die Anforderungen an Oberflächenqualität und Maßhaltigkeit zu erfüllen. Entsprechendes gilt selbstverständlich für andere Bauteile, an deren Beschaffenheit vergleichbare Anforderungen gestellt werden.

Nachfolgend wird die Erfindung anhand einer Ausführungsbeispiele zeigenden Zeichnung näher erläutert. Deren Figuren zeigen jeweils schematisch:

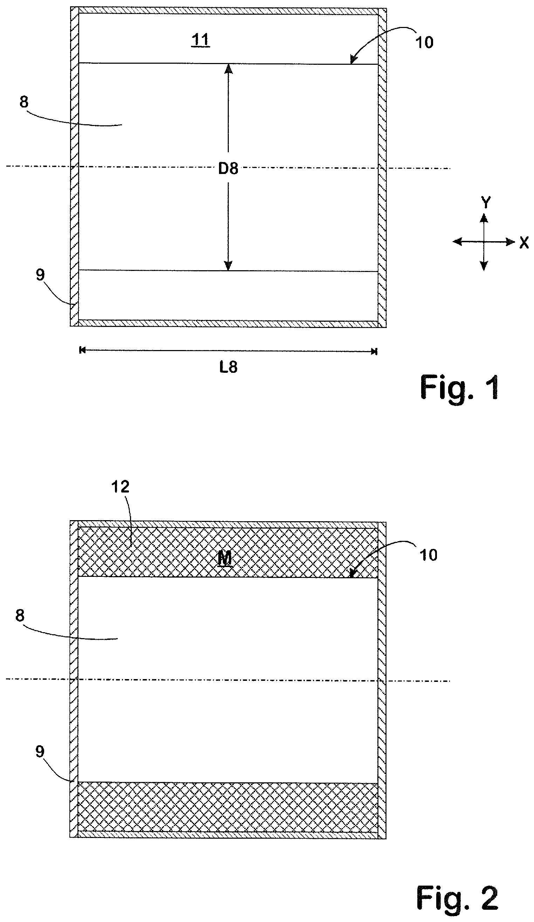

- Fig. 1: einen in einer Kapsel für ein heißisostatisches Pressen vorbereiteten Kernabschnittsrohling in seitlicher Schnittansicht;
- Fig. 2: den Kernabschnittsrohling nach dem Auftrag eines eine verschleißfeste Schicht bildenden Pulvermaterials in einer der Fig. 1 entsprechenden Schnittansicht;
- Fig. 3: einen aus dem Kernabschnittsrohling und dem verschleißfesten Material gebildeten Verbundkörper in einer den Figuren 1 und 2 entsprechenden Ansicht;
- Fig. 4: eine aus dem Verbundkörper geformte Welle in seitlicher Schnittansicht;

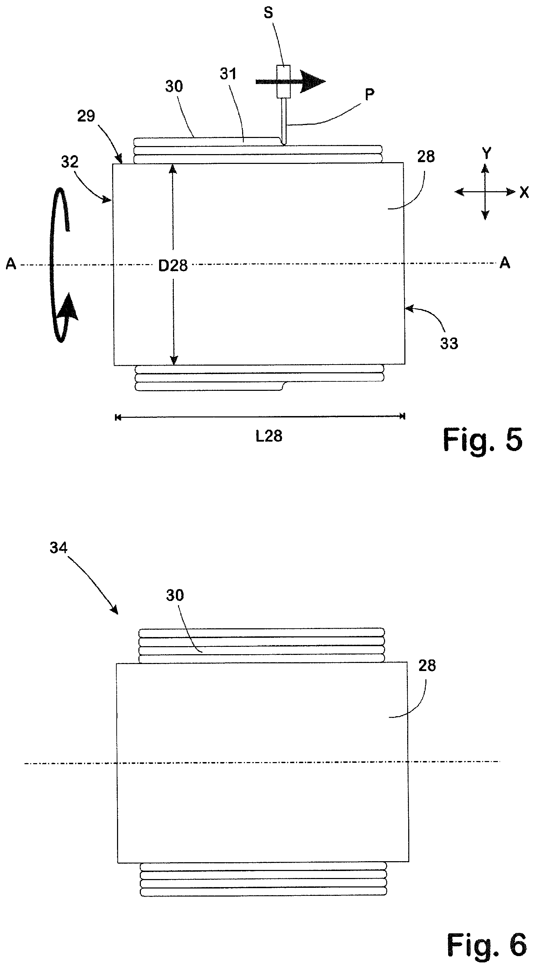

- Fig. 5: einen Kernabschnittsrohling beim Auftragen eines verschleißfesten Materials durch Auftragsschweißen in seitlicher Schnittansicht;
- Fig. 6: den nach Abschluss des Auftrags des verschleißfesten Materials auf den Kernabschnittsrohling gemäß Fig. 5 erhaltenen Verbundkörpers in einer Fig. 5 entsprechenden Ansicht;
- Fig. 7: eine Walze zum Walzen von Stahlflachprodukten in einer den Figuren 5 und 6 entsprechenden seitlichen Ansicht.

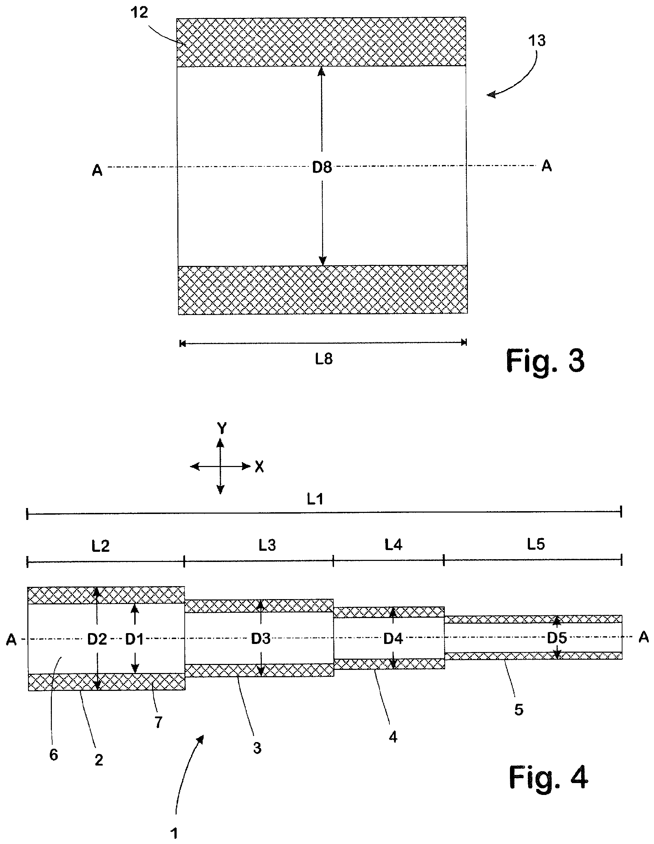

Ziel eines ersten Versuchs war die Herstellung einer Welle 1 der in Fig. 4 dargestellten Art. Diese Welle 1 weist vier Wellenabschnitte 2,3,4,5 auf, deren Durchmesser D2,D3,D4,D5 ausgehend von dem einen äußeren Absatz 2 bis zum anderen äußeren Absatz 5 der Welle 1 stufenweise abnimmt. Gleichzeitig haben die Wellenabschnitte 2 - 5 unterschiedliche in Richtung der Drehachse A der Welle 1 gemessene Teillängen L2,L3,L4,L5.

Die Welle 1 mit der Gesamtlänge L1 umfasst einen Kernabschnitt 6, der aus dem unter der Werkstoffnummer 1.0402 genormten Baustahl C20, dessen Zusammensetzung in Tabelle 1 angegeben ist, hergestellt ist. Auf der Umfangsfläche der Abschnitte 2 - 5 des Kernabschnitts 6 ist jeweils eine Schicht 7 ausgebildet, die aus einer ersten Variante FeCrV10' des verschleißfesten, an sich bekannten Kaltarbeitsstahls FeCrV10 bestand. Die Zusammensetzung des Werkstoffs FeCrV10' der Schicht 7 ist in Tabelle 1 ebenfalls angegeben.

Für die Herstellung der Welle 1 wurde ein aus dem Stahl C20 bestehender zylindrischer Kernabschnittsrohling 8 bereitgestellt, dessen in der achsparallel zur Drehachse A ausgerichteten Raumrichtung X gemessene Länge L8 einem Bruchteil der Länge L1 entspricht und derart bemessen war, dass der Grundkörper mit einer ihn umgebenden Kapsel 9 problemlos in eine konventionelle, hier nicht gezeigte Einrichtung zum heißisostatischen Pressen ("HIPen") gesetzt werden könnte. Gleichzeitig war der in der senkrecht zur Raumrichtung X ausgerichteten Raumrichtung Y gemessene Durchmesser D8 des Kernabschnittsrohlings 8 so bemessen, dass das Materialvolumen des Kernabschnittsrohlings 8 dem gesamten über die Wellenabschnitte 2 - 5 verteilten Materialvolumen des Kernabschnitts 6 der Welle 1 entsprach.

Die den Kernabschnittsrohling 8 für das HIPen umgebende, rohrförmige Kapsel 9 bestand aus einem für diese Zwecke üblicherweise verwendeten Stahlblech. Ihr Durchmesser war dabei so bemessen, dass bei koaxialer Ausrichtung von Kernabschnittsrohling 8 und Kapsel 9 zwischen der Umfangsfläche 10 des Kernabschnittsrohlings 8 und der Innenfläche der Kapsel 9 ein umlaufender freier Raum 11 vorhanden war. Die Stirnseiten der Kapsel 9 sind nach dem Platzieren des Kernabschnittsrohlings 8 durch Blechdeckel, die dicht an den Stirnseiten des Kernabschnittsrohlings 8 anlagen, dicht verschlossen worden.

Über eine hier nicht gezeigte, an der Kapsel 9 in üblicher Weise vorgesehene Zuführung ist anschließend ein aus dem Werkstoff FeCrV10 bestehendes Legierungspulver M mit einer für diese Zwecke geeigneten Körnung in den Raum 11 gefüllt worden, so dass die Umfangsfläche 10 des Kernabschnittsrohlings 8 vollständig von Legierungspulver M bedeckt war.

Daraufhin ist die Kapsel 9 in die nicht gezeigte Einrichtung zum HIPen gesetzt worden, in der das Legierungspulver M in konventioneller Weise bei einem Druck von ca. 100 MPa und Temperaturen von 900 - 1200 °C verdichtet und zu einer dichten Schicht 12 versintert worden ist. In Folge der dabei ablaufenden Festkörperdiffusionsvorgänge entstand gleichzeitig eine feste, stoffschlüssige Anbindung der Schicht 12 an den Kernabschnittsrohling 8.

Nach Abschluss des heißisostatischen Pressvorgangs ist die Kapsel 9 von dem aus dem Kernabschnittsrohling 8 und der durch das HIPen auf ihn aufgetragenen aus dem verschleißfesten Kaltarbeitsstahl FeCrV10 bestehenden Schicht 12 gebildeten Verbundkörper 13 getrennt worden.

Der Verbundkörper 13 ist dann durch Schmieden in an sich ebenfalls bekannter Weise in mehreren Schritten zu der Welle 1 umgeformt worden.

Es zeigte sich, dass es problemlos möglich war, aus dem Verbundkörper 13 ein Bauteil, wie die Welle 1, zu formen, deren Länge L1 beträchtlich größer ist als die Länge L8 des Verbundkörpers 13 und des das Ausgangsprodukt für die Herstellung der Welle 1 bildenden Kernabschnittsrohlings 8 und deren Durchmesser D2,D3,D4,D5 jeweils wesentlich kleiner ist als der Durchmesser D8 des Kernabschnittsrohlings 8. Dabei erwies es sich als ebenso problemlos möglich, an der Welle 1 einen zapfenartigen Wellenabschnitt 5 auszubilden, dessen Durchmesser D5 deutlich kleiner war als der Durchmesser D2 des dicksten Wellenabschnitts 2 der Welle 1.

Erforderlichenfalls kann die Welle 1 nach dem Schmieden abschließend mechanisch endbearbeitet und zur Einstellung ihrer mechanischen Eigenschaften einer Wärmebehandlung unterzogen werden.

Bei der fertigen Welle 1 bildet das Material des Kernabschnittsrohlings 8 des Verbundkörpers 13 den Kernabschnitt 6 und das Material M der Schicht 12 des Verbundkörpers 13 die verschleißfeste Schicht 7.

Die voranstehend beschriebene Art und Weise der Herstellung lässt sich demnach ohne Weiteres auf die Herstellung von anderen langgestreckten Bauteilen, wie einer Extruderschnecke für die Kunststoffverarbeitung oder einer Walze für das Walzen von metallischen Bändern oder Blechen, übertragen, bei denen vergleichbare geometrische Verhältnisse zwischen den einzelnen Bauteilabschnitten bestehen.

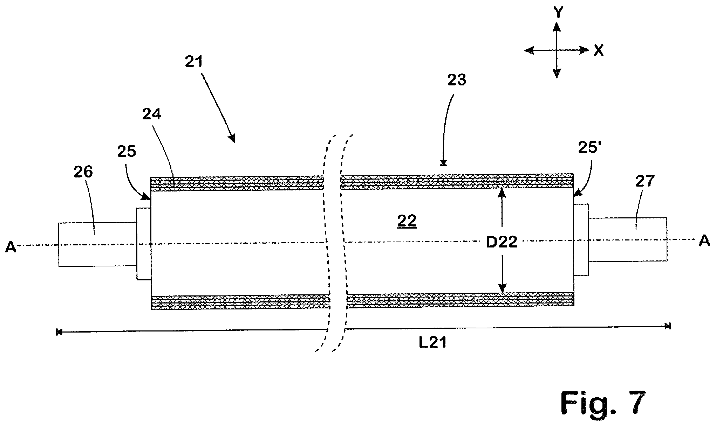

In einem zweiten Versuch sollte die in Fig. 7 dargestellte Walze 21 gefertigt werden, die als Arbeitswalze in einem Walzgerüst zum Wälzen von Stahlband vorgesehen war. Die Walze 21 mit einer Gesamtlänge L21 von bis zu 10 m sollte einen Kernabschnitt 22, der ebenfalls aus dem oben schon erwähnten Stahl C20 besteht, und einen Ballenabschnitt 23 aufweisen, an dessen Umfangsfläche eine verschleißbeständige Schicht 24 vorhanden ist. Gleichzeitig sollten an den Stirnseiten 25,25' der Walze 21 jeweils ein Zapfen 26,27 ausgebildet sein, in denen die Walze 21 im Gebrauch gelagert wird.

Für die Herstellung der Walze 21 ist ein zylindrischer Kernabschnittsrohling 28 bereitgestellt worden, der aus dem Stahl C20 bestand und dessen Länge L28 wie die Länge L8 beim Kernabschnittsrohling 8 nur einem kleinen Bruchteil der Länge L21 der herzustellenden Walze 21 entsprach. Gleichzeitig war der Durchmesser D28 des Kernabschnittsrohlings 28 um so viel größer als der Durchmesser D22 des Kernabschnitts 22 der Walze 21, dass das Materialvolumen des Kernabschnittsrohlings 28 um ein gewisses Übermaß größer war als das vom Kernabschnitt 22 und den Zapfen 26,27 eingenommene Materialvolumen. Das Übermaß des Materialvolumens des Kernabschnittsrohlings 28 war dabei so bemessen, dass nach den nachfolgend erläuterten Arbeitsschritten im Bereich der aus dem Material des Kernabschnittsrohlings 28 geformten Zapfen 26,27 noch ausreichend Materialvolumen für eine spanabhebende Fertigbearbeitung zur Verfügung stand.

Auf die Umfangsfläche 29 des Kernabschnittsrohlings 28 ist durch "Plasma-Pulver-Auftragsschweißen", in der Fachsprache auch "Plasma-Transferred-Arc-Schweißen", kurz "PTA-Schweißen" genannt, eine aus einem verschleißfesten Material gebildete Schicht 30 aufgetragen worden.

In einer ersten Variante des zweiten Versuchs ist die Schicht 30 aus einem mit einer Körnung von 63 - 160 µm vorliegenden Pulver P gebildet worden, das aus der in Tabelle 2 angegebenen zweiten Variante FeCrV10" des Kaltarbeitsstahls FeCrV10 bestand.

In einer zweiten Versuchsvariante ist als Pulver P ein aus dem Schnellarbeitsstahl HSS30 bestehendes Pulver mit einer Körnung von 63 - 180 µm zum Einsatz gekommen. Die Zusammensetzung des unter der Werkstoffnummer 1.3294 genormten Werkstoffs HSS30 ist ebenfalls in Tabelle 2 angegeben.

Sowohl der Werkstoff FeCrV10 als auch der Werkstoff HSS30 stellen typische Vertreter von Werkstoffen dar, die üblicherweise für pulvermetallurgisch erzeugte hochverschleißfeste Schichten von Bauteilen, wie Walzen und Extruderschnecken, verwendet werden, die im praktischen Einsatz hohen Druckbelastungen oder der Gefahr von abrasivem Verschleiß ausgesetzt sind. Der hier beschriebene zweite Versuch zeigte, dass sich beide für die verschleißfeste Schicht 24 verwendeten Werkstoffe FeCrV10 und HSS30 gleicherweise für die erfindungsgemäßen Zwecke eignen,

Zum Auftragsschweißen ist der Kernabschnittsrohling 28 auf eine hier nicht gezeigte Drehbank gespannt und in Rotation versetzt worden. Ein Schweißbrenner S wird dabei achsparallel zur Drehachse A bewegt und erzeugt so mehrere Lagen von radial um den Kernabschnittsrohling 28 umlaufenden Schweißraupen 31 auf der Umfangsfläche 29.

Die Positionierung der Schweißraupen 31 ist dabei in einer diskontinuierlichen Verfahrensweise, bei dem der Vorschub des Schweißbrenners S jeweils nach einem Umlauf des Kernabschnittsrohlings 28 erfolgt und nebeneinander liegende ringförmige Schweißraupen 31 erzeugt werden, oder in einer kontinuierlichen Fahrweise möglich, bei der jeweils eine durchgehende, schraubenförmig um den Kernabschnittsrohling 28 umlaufende Schweißraupe 31 erzeugt wird, indem sich gleichzeitig der Kernabschnittsrohling 28 synchron zum kontinuierlichen Vorschub des Schweißbrenners S bewegt.

Alternativ ist es aber auch möglich, axial sich erstreckende Schweißraupen 31 auf der Umfangsfläche 29 zu erzeugen, indem der Kernabschnittsrohling 28 jeweils angehalten wird, bis der Schweißbrenner S die Länge L28 des Kernabschnittsrohlings 28 überstrichen hat.

Allgemein ist anzumerken, dass durch Wiederholung des Auftragsschweißprozesses durch den entstehenden mehrlagigen Aufbau die Schichtdicken erzeugt werden können, welche für den späteren Umformprozess benötigt werden. Darüber hinaus ist es auf diesem Wege auch möglich, einen gradierten Schichtaufbau zu erzeugen, in dem unterschiedliche Werkstoffe nacheinander aufgeschweißt werden. So können die Eigenschaften vom Stahlkern bis zum Rand der äußeren Schicht mit einem Gradienten aufgebaut werden. Erforderlichenfalls können zwischen den einzelnen Arbeitsgängen Zunderreste oder andere Schweißrückstände, die auf der jeweils außen liegenden Fläche der aufgetragenen Schweißraupen 31 vorhanden sind, entfernt werden. Bei Verwendung einer Drehbank zum Antrieb des Kernabschnittsrohlings 28 kann dies in derselben Aufspannung erfolgen wie das Auftragsschweißen selbst.

Beim Auftragen der Schweißraupen 31 wird angrenzend an die Stirnseiten 32,33 des Kernabschnittsrohlings 28 jeweils ein Endabschnitt der Umfangsfläche 29 ausgespart, so dass dort kein verschleißfestes Material P abgeschieden wird.

Nach dem Auftragsschweißen wurde der aus dem Kernabschnittsrohling 28 und der auf ihm durch das Auftragsschweißen aufgetragenen Schicht 30 gebildete Verbundkörper 34 in mehreren Schritten durch Schmieden in an sich bekannterWeise zu der Walze 21 warmumgeformt. Dabei ist aus dem Kernabschnittsrohling 28 des Verbundkörpers der Kernabschnitt 22 der Walze 21 und aus der Schicht 30 des Verbundkörpers die verschleißfeste Schicht 24 der Walze 21 geformt worden.

Das nicht mit verschleißfestem Material P belegte Materialvolumen des Kernabschnittsrohlings 28 diente bei der Umformung für die Erzeugung der Zapfen 26,27. Alternativ ist es selbstverständlich ebenso möglich, die Umfangsfläche 29 des Kernabschnittsrohlings 28 vollständig mit der Schicht 30 zu belegen und nach der Umformung des Verbundkörpers 34 die dann im Bereich der Zapfen vorhandene verschleißfeste Schicht 24 nachträglich spanabhebend zu entfernen.

Die erhaltene Walze 21 ist einer Wärmebehandlung unterzogen und spanabhabend nachbearbeitet worden, um ihre mechanischen Eigenschaften und die geforderte Maßhaltigkeit zu gewährleisten.

Allgemein ist anzumerken, dass im Zuge der schmiedetechnischen Umformung und der Wärmebehandlung die im Bereich der Wärmeeinflusszone des Auftragsschweißens im Kernabschnitt 22 vorhandenen Kornvergröberungen und undefinierten Wärmebehandlungszustände beseitigt worden sind. Durch die Fertigungsschritte "Schmieden" und "Wärmebehandeln" fand im gesamten Verbundkörper 34 eine Kornfeinung statt und es wurde ein definierter Wärmebehandlungszustand eingestellt. Als ein wesentlicher Vorteil des zweiten, auf dem Auftragsschweißen basierenden Fertigungswegs erwies sich dabei die gegenüber dem HIP-Prozess vereinfachte Fertigungsweise.

### BEZUGSZEICHEN

- 1: Welle
- 2 - 5: Wellenabschnitte der Welle 1
- 6: Kernabschnitt der Welle 1
- 7: Schicht aus einem verschleißfesten Material M
- 8: Kernabschnittsrohling
- 9: Kapsel
- 10: Umfangsfläche des Kernabschnittsrohlings 8
- 11: Raum in der Kapsel 9
- 12: auf die Umfangsfläche 10 aufgetragene Schicht
- 13: Verbundkörper
- 21: Walze
- 22: Kernabschnitt der Walze 21
- 23: Ballenabschnitt der Walze 21
- 24: verschleißbeständige Schicht der Walze 21
- 25,25': Stirnseiten der Walze 21
- 26,27: Zapfen der Walze
- 28: Kernabschnittsrohling
- 29: Umfangsfläche des Kernabschnittsrohlings 28
- 30: aus einem verschleißfesten Material auf der Umfangsfläche 28 gebildete Schicht
- 31: Schweißraupen
- 32,33: Stirnseiten des Kernabschnittsrohlings 28
- 34: Verbundkörper
- A: Drehachse der Bauteile 1,21
- D1: Durchmesser des Kernabschnitts des Wellenabschnitts
- D2 - D5: Durchmesser der Wellenabschnitte 2 - 5
- D8: Durchmesser des Kernabschnittsrohlings 8
- D28: Durchmesser des Kernabschnittsrohlings 28
- D22: Durchmesser des Kernabschnitts 22 der Walze 21
- L1: Gesamtlänge der Welle 1
- L2 - L5: Teillängen L2,L3,L4,L5 der Welle 1
- L8: Länge des Kernabschnittsrohlings 8
- L21: Gesamtlänge der Walze 21
- L28: Länge des Kernabschnittsrohlings
- M: Legierungspulver
- P: Pulver
- S: Schweißbrenner
- X,Y: Raumrichtungen

**Tabelle 1**

| | C | Si | Mn | P | S | Cr | Mo | Ni | V |
|---|---|---|---|---|---|---|---|---|---|
| C20 | 0,20 | <0,40 | 0,55 | <0,045 | <0,045 | <0,40 | <0,10 | <0,40 | - |
| FeCrV10' | 2,55 | 1,19 | 0,66 | 0,022 | 0,041 | 5,08 | 1,36 | 0,08 | 9,63 |
| Angaben in Gew.-%, Rest Eisen und unvermeidbare Verunreinigungen | | | | | | | | | |

**Tabelle 2**

| | C | Si | Mn | P | S | Cr | Mo | Co | W | V |
|---|---|---|---|---|---|---|---|---|---|---|
| FeCrV10" | 2,31 | 0,85 | 0,78 | 0,016 | 0,013 | 4,25 | 1,36 | - | - | 9,9 |
| HSS30 | 1,32 | 0,46 | 0,27 | 0,017 | 0,015 | 4,07 | 5,10 | 8,29 | 6,53 | 3,10 |
| Angaben in Gew.-%, Rest Eisen und unvermeidbare Verunreinigungen | | | | | | | | | | |

## Patentansprüche

1. Verfahren zum Herstellen eines Bauteils (1,21), nämlich einer Welle, Walze oder einer Extruderschnecke, wobei das Bauteil (1,21) einen aus einem Baustahl bestehenden Kernabschnitt (6,22) und eine von dem Kernabschnitt (6,22) getragene, an einer Umfangsfläche des Kernabschnitts (6,22) vorhandene verschleißfeste Schicht (7,24) aufweist, umfassend folgende Arbeitsschritte:
a) Bereitstellen eines aus dem metallischen Werkstoff bestehenden Kernabschnittsrohlings (8,28), dessen Abmessung (L8,L28) in einer ersten Raumrichtung (Y) größer als die Sollfertigabmessung (D1,D22) des Kernabschnitts (6,22) des Bauteils (1,21) in der betreffenden Raumrichtung und dessen Abmessung (L1,L21) in einer zweiten Raumrichtung (X) kleiner als die Sollfertigabmessung des Kernabschnitts (1,22) des Bauteils (1,21) in dieser zweiten Raumrichtung (X) ist, wobei der Kernabschnittsrohling (8,28) eine zylindrische Form aufweist;
b) Auftragen eines die verschleißfeste Schicht (7,24) bei dem fertigen Bauteil (1,21) bildenden Materials (M,P) auf die Umfangsfläche (10,29) des Kernabschnittsrohlings (8,28) derart, dass das aufgetragene Material (M,P) und der Kernabschnittsrohling (8,28) einen festen Verbundkörper (13,34) bilden, wobei das verschleißfeste Material (M) ein Kaltarbeitsstahl oder ein Schnellarbeitsstahl ist, und das verschleißfeste Material (M)
- in Pulverform auf die Umfangsfläche (10) des Kernabschnittsrohlings (8) aufgebracht und durch heißisostatisches Pressen mit dem Kernabschnittsrohling (8) zu dem Verbundkörper (13) verbunden wird oder
- durch Auftragsschweißen auf die Umfangsfläche (29) des Kernabschnittsrohlings (28) aufgebracht und mit ihm zu dem Verbundkörper (34) verbunden wird;
c) Umformen des Verbundkörpers (13,34) zu dem Bauteil (1,21), wobei der Verbundkörper (13,34) bei der Umformung in Richtung der zweiten Raumrichtung (X) gestreckt und in Richtung der ersten Raumrichtung (Y) gestaucht wird, bis die Abmessungen des Verbundkörpers (13,34) in den Raumrichtungen (X,Y) mindestens den Sollfertigabmessungen (L1,D1) des Bauteils (1,21) in diesen Raumrichtungen (X,Y) entsprechen, wobei dass die verschleißfeste Schicht (7,24) bildende Material (M,P) an einer Umfangsfläche des Bauteils (1,21) vorliegt;
d) optionales Fertigbearbeiten des Bauteils (1,21).

2. Verfahren nach Anspruch 1, **dadurch gekennzeichnet,**
**dass** das Bauteil (1,21) eine rotationssymmetrische Form besitzt.

3. Verfahren nach einem der voranstehenden Ansprüche, **dadurch gekennzeichnet, dass** die Umformung des Verbundkörpers (8,28) zu dem Bauteil (1,21) durch Schmieden erfolgt.

4. Verfahren nach einem der voranstehenden Ansprüche, **dadurch gekennzeichnet, dass** dass das Bauteil eine Walze (21) zum Warm- oder Kaltwalzen von metallischen Bändern ist und **dass** an den Stirnseiten seines Kernabschnitts (22) jeweils ein koaxial zum Kernabschnitt ausgerichteter Zapfen (26,27) ausgebildet ist.

5. Verfahren nach Anspruch 4, **dadurch gekennzeichnet, dass** beim Auftrag des die verschleißfeste Schicht (30) bildenden Materials (P) (Arbeitsschritt b)) ausgehend von der jeweiligen Stirnseite (32,33) des Kernabschnittsrohlings (28) über eine achsparallel zur Längsachse der auszubildenden Zapfen gemessene Länge ausgespart wird, die derart bemessen ist, dass das Volumen des Kernabschnittsrohlings (28), über den sich die ausgesparte Länge der Umfangsfläche (29) erstreckt, mindestens dem Volumen des an der jeweiligen Stirnseite (32,33) der fertigen Walze (21) auszubildenden Zapfens (26,27) entspricht.

6. Verfahren nach einem der Ansprüche 4 oder 5, **dadurch gekennzeichnet, dass** die Zapfen (26,27) schmiedetechnisch ausgebildet werden (Arbeitsschritt d)).

7. Verfahren nach einem der voranstehenden Ansprüche, **dadurch** gekennzei**c**hnet, dass die Umformung des Verbundkörpers (13,34) im Arbeitsschritt c) derart durchgeführt wird, dass das Bauteil (1,21) nach dem Arbeitsschritt c) in mindestens einer Raumrichtung (X,Y) ein Übermaß gegenüber dem Sollfertigabmaß des Bauteils (1,21) in dieser Raumrichtung (X,Y) aufweist, und dass das Bauteil (1,21) im Arbeitsschritt d) durch eine spanabhebende Bearbeitung so fertig bearbeitet wird, dass seine Abmessung in der betreffenden Raumrichtung (X,Y) dem Sollfertigmaß entspricht.

## Claims

1. Method for producing a component (1, 21), namely a shaft, roller or an extruder screw, wherein the component (1, 21) comprises a core portion (6, 22) which consists of a structural steel, and a wear-resistant layer (7, 24) which is carried by the core portion (6, 22) and which is present on a peripheral surface of the core portion (6, 22), comprising the following operating steps:
a) providing a core portion blank (8, 28) which consists of the metal material and whose dimension (L8, L28) in a first spatial direction (Y) is greater than the desired finished dimension (D1, D22) of the core portion (6, 22) of the component (1, 21) in the relevant spatial direction and whose dimension (L1, L21) in a second spatial direction (X) is smaller than the desired finished dimension of the core portion (1, 22) of the component (1, 21) in this second spatial direction (X), wherein the core portion blank (8, 28) has a cylindrical shape;
b) applying a material (M, P) which forms the wear-resistant layer (7, 24) in the finished component (1, 21) to the peripheral surface (10, 29) of the core portion blank (8, 28) in such a manner that the applied material (M, P) and the core portion blank (8, 28) form a stable composite body (13, 34), wherein the wear-resistant material (M) is a cold work steel or a high-speed steel, and the wear-resistant material (M)
- is applied in powder form to the peripheral surface (10) of the core portion blank (8) and is joined by hot isotactic pressing to the core portion blank to form the composite body (13), or
- is applied to the peripheral surface (29) of the core portion blank (28) and is joined to it to form the composite body (34) by deposition welding;
c) shaping the composite body (13, 34) to form the component (1, 21), wherein the composite body (13, 34) during the shaping is extended in the direction of the second spatial direction (X) and is compressed in the direction of the first spatial direction (Y) until the dimensions of the composite body (13, 34) in the spatial directions (X, Y) at least correspond to the desired finished dimensions (L1, D1) of the component (1, 21) in these spatial directions (X, Y), wherein the material (M, P) which forms the wear-resistant layer (7, 24) is present on a peripheral surface of the component (1, 21);
d) optional finishing processing of the component (1, 21).

2. Method according to claim 1, **characterised in that** the component (1, 21) has a rotationally symmetrical shape.

3. Method according to any one of the preceding claims, **characterised in that** the shaping of the composite body (8, 28) to form the component (1, 21) is carried out by means of forging.

4. Method according to any one of the preceding claims, **characterised in that** the component is a roller (21) for hot or cold rolling metal strips, and **in that** on each of the end faces of the core portion (22) thereof a journal (26, 27) which is orientated coaxially relative to the core portion is formed.

5. Method according to claim 4, **characterised in that** when the material (P) which forms the wear-resistant layer (30) is applied (operating step b)) starting from the respective end face (32, 33) of the core portion blank (28) a recess is formed over a length which is measured axially parallel to the longitudinal axis of the journal which is to be formed and which is dimensioned in such a manner that the volume of the core portion blank (28) over which the recessed length of the peripheral surface (29) extends corresponds to at least the volume of the journal (26, 27) which is to be formed on the respective end face (32, 33) of the finished roller (21).

6. Method according to any one of claims 4 or 5, **characterised in that** the journals (26, 27) are formed using forging technology (operating step d)).

7. Method according to any one of the preceding claims, **characterised in that** the shaping of the composite body (13, 34) in the operating step c) is carried out in such a manner that the component (1, 21) after the operating step c) has in at least one spatial direction (X, Y) an oversize with respect to the desired finished dimension of the component (1, 21) in this spatial direction (X, Y), and **in that** the component (1, 21) in the operating step d) is subjected to a finishing processing operation by means of a machining processing operation such that the dimension thereof in the relevant spatial direction (X, Y) corresponds to the desired finished dimension.

## Revendications

1. Procédé de fabrication d'un composant (1, 21), à savoir un arbre, un rouleau ou une vis d'extrusion, où ledit composant (1, 21) comprend une partie centrale (6, 22) faite d'un acier de construction et une couche résistante à l'usure (7, 24) supportée par ladite partie centrale (6, 22) et prévue sur une surface périphérique de ladite partie centrale (6, 22), comprenant les étapes suivantes :
a) mise à disposition d'une ébauche de partie centrale (8,28) constituée du matériau métallique, dont la dimension (L8,L28) dans une première direction spatiale (Y) est supérieure à la dimension finie souhaitée (D1,D22) de la partie centrale (6, 22) du composant (1, 21) dans la direction spatiale concernée et dont la dimension (L1, L21) dans une deuxième direction spatiale (X) est inférieure à la dimension finie souhaitée de la partie centrale (1, 22) du composant (1, 21) dans cette deuxième direction spatiale (X), l'ébauche de partie centrale (8,28) a une forme cylindrique;
b) application d'un matériau (M,P) formant la couche résistante à l'usure (7,24) du composant fini (1,21) sur la surface périphérique (10,29) de l'ébauche de partie centrale (8,28) de telle sorte que le matériau appliqué (M,P) et l'ébauche de partie centrale (8,28) forment un corps composite solide (13,34), où le matériau résistant à l'usure (M) est un acier pour travail à froid ou un acier rapide, et le matériau résistant à l'usure (M)
- est appliqué sous forme de poudre sur la surface périphérique (10) de l'ébauche de partie centrale (8) et est lié à l'ébauche de partie centrale (8) par pressage isostatique à chaud pour former le corps composite (13) ou
- est appliqué par soudage par accumulation sur la surface périphérique (29) de l'ébauche de partie centrale (28) et joint à celle-ci pour former le corps composite (34) ;
c) formage du corps composite (13, 34) en un composant (1, 21), où le corps composite (13, 34) est étiré dans la direction de la deuxième direction spatiale (X) et comprimé dans la direction de la première direction spatiale (Y) pendant le formage jusqu'à ce que les dimensions du corps composite (13), 34) dans les directions spatiales (X, Y) correspondent au moins aux dimensions finies souhaitées (L1, D1) du composant (1, 21) dans ces directions spatiales (X, Y), le matériau (M, P) formant la couche résistante à l'usure (7, 24) étant présent sur une surface circonférentielle du composant (1, 21) ;
d) éventuellement la finition dudit composant (1,21).

2. Procédé selon la revendication 1, **caractérisé en ce que** le composant (1,21) a une forme à symétrie de révolution.

3. Procédé selon l'une des revendications précédentes, **caractérisé en ce que** la formation du corps composite (8,28) en composant (1,21) est réalisée par forgeage.

4. Procédé selon l'une des revendications précédentes, **caractérisé**
- **en ce que** le composant est un rouleau (21) pour laminage à chaud ou à froid de bandes métalliques et
- **en ce qu'**un tenon (26, 27) aligné coaxialement avec la partie centrale est formé sur chacune des faces d'extrémité de sa partie centrale (22).

5. Procédé selon la revendication 4, **caractérisé en ce que** lors de l'application du matériau (P) formant la couche résistante à l'usure (30) (étape de travail b)), un longueur mesurée en partant de la face d'extrémité respective (32, 33) de l'ébauche de partie centrale (28), axialement parallèlement à l'axe longitudinal des tenons à former, est épargnée, ladite longueur étant dimensionné de telle sorte que le volume de l'ébauche de partie centrale (28) sur lequel s'étend la longueur épargnée de la surface circonférentielle (29) correspond au moins au volume du tenon (26, 27) à former sur la face d'extrémité respective (32, 33) du rouleau fini (21).

6. Procédé selon l'une des revendications 4 ou 5, **caractérisé en ce que** les tenons (26,27) sont formés par forgeage (étape d)).

7. Procédé selon l'une quelconque des revendications précédentes, **caractérisé en ce que** le formage du corps composite (13, 34) dans l'étape de travail c) est effectué de telle manière à ce que le composant (1, 21) après l'étape de travail c) présente, dans au moins une direction spatiale (X, Y), une surdimension par rapport à la dimension finie souhaitée du composant (1, 21) dans cette direction spatiale (X, Y), et **en ce que** le composant (1, 21) est fini à l'étape d) par usinage, de telle manière à ce que sa dimension dans la direction spatiale concernée (X, Y) corresponde à la dimension finie.
